# EUROPEAN PATENT APPLICATION

(11) **EP 3 392 301 A1**
(43) Date of publication of application: **24.10.2018**
(21) Application number: 16875586.6
(22) Date of filing: 12.12.2016
(51) Int. Cl.: C08L 1/08, C01B 32/152, C01B 32/158, C08K 3/04

(54) **NOVEL NANOCARBON COMPOSITE**

(30) Priority: 16.12.2015 JP 2015245715
(71) Applicant: Nano Summit Co., Ltd., Kawaguchi-shi, Saitama 333-0844 (JP); The University Of Tokyo, Tokyo 113-8654 (JP)
(72) Inventor: SAKATA Ichiro, Tokyo 113-8654 (JP); FUGETSU Bunshi, Tokyo 113-8654 (JP); KUMAGAI Kotaro, Kawaguchi-shi Saitama 333-0844 (JP); TOMITA Jun, Kawaguchi-shi Saitama 333-0844 (JP); MANABE Shoichi, Kawaguchi-shi Saitama 333-0844 (JP)
(74) Representative: Patentanwälte Bals & Vogel
(86) International application number: PCT/JP2016/086899
(87) International publication number: WO 2017/104609

(57) **Abstract**

[Problem]

The present invention addresses the problem of providing a novelnanocarbon composite which is used to achieve a stable and uniform mechanical strength improvement effect in a carbon fiber-reinforced plastic or carbon fiber-reinforced composite material impregnated with a nanocarbon-containing resin.

[Solution]

A novel nanocarbon composite containing nanocarbon and nano-cellulose modified with a functional group(s) or a novel nanocarbon composite containing nanocarbon, nano-cellulose modified with a functional group(s), and a affinitive binding agent is constituted by incorporating a resin serving as a matrix in a carbon fiber-reinforced plastic or carbon fiber-reinforced composite material.

## Description

### Technical field

The present invention relates to a novel nanocarbon composite used for the carbon fiber reinforced plastic or carbon fiber reinforced carbon composite material.

### Prior art

Conventionally, in a mixture of nanocarbon and resin prior to pre-preg molding in a semi-cured state, nanocarbon that has not been modified by a functional group(s) was exclusively used, and benefits obtained by adding and dispersing nanocarbon, which is not modified by a functional group(s), to the resin have been verified.

However, when nanocarbon, which has not been modified by a functional group(s), is used, the mechanical strength such as bending strength, impact strength, and twisting strength partially increases, but stable or uniform increase in mechanical strength could not be obtained sufficiently (see Patent Document 1).

For achieving the benefit and stable or uniform increase in mechanical strength, it is known that increasing the bonding force between nanocarbon and resin will suffice (see Patent Document 2), and modifying the functional group in nanocarbon will enhance the molecular bond between nanocarbon and epoxy, thereby obtaining stable and uniform benefit. However, as the conventional methods of modifying functional group in nanocarbon, wet techniques such as chemical modification method that goes through the surface treatment process by using a strong acid such as aqua regia is known; however, when using this technique, for example, use of strong acid damages the structure of nanocarbon resulting in structural defects, making it difficult to practically use it in the industry.

### Background art

### Patent literature

Patent Document 1: Unexamined patent application 2004-298357
Patent Document 2: Unexamined patent application 2013-39317

### Summary of Invention

### Problem to be solved by the invention

The present invention provides a novel nanocarbon composite which is used to achieve a stable and uniform mechanical strength improvement effect in a carbon fiber-reinforced plastic or carbon fiber-reinforced composite material impregnated with a nanocarbon-containing resin.

### Means for solving the problem

The inventors have found that the reason the practical industrial use was difficult to be achieved when a functional group(s) is/are modified to nanocarbon by a conventional wet method is because the structure of the nanocarbon is damaged due to using a strong acid or the like, and the inventors made the present invention by finding a method of adding (more precisely, a combining method) a functional group in place of conventional wet method. Furthermore, in case of nanocarbon, it is impossible to maintain a stable and uniform dispersion state where it is aggregated in the solvent (hereinafter referred to as the "aggregation problem of nanocarbon"), and in addition, it prevents stable and uniform increase of mechanical strength of the carbon fiber reinforced plastic or the carbon fiber reinforced carbon composite material impregnated with a resin containing nanocarbon, the inventors found a method of adding a functional group that solves the aggregation problem of nanocarbon, and completed the present invention.

### Effects of the invention

By using the present invention, as compared to the conventional wet method where strong acid or the like is used, nanocarbon is combined with a functional group without damaging the structure of nanocarbon, and as a result, a functional group can be added to nanocarbon. Furthermore, use of the present invention solves the aggregation problem of nanocarbon, and stable and uniform dispersion state can be achieved. In addition, by using the nanocarbon combined with a functional group as per the present invention, stable and uniform increase in mechanical strength of the carbon fiber reinforced plastic or the carbon fiber reinforced carbon composite material impregnated with a resin containing nanocarbon can be obtained.

### Simple description of drawings

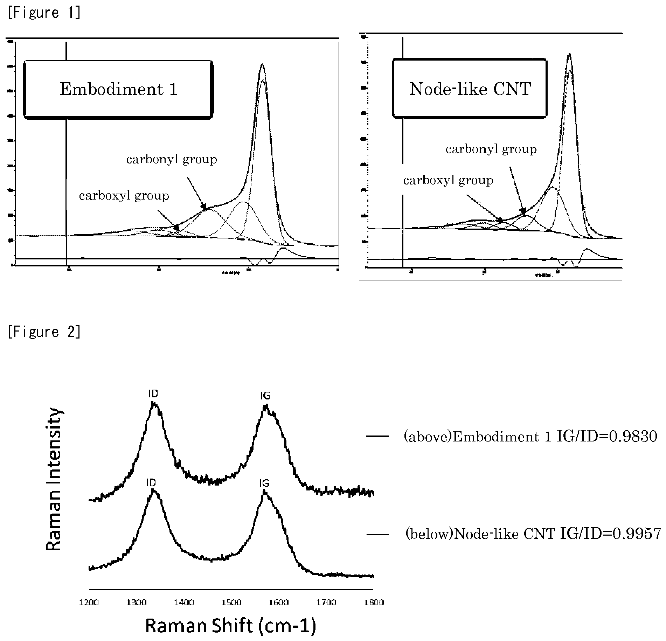

Figure 1 is a cross-sectional view of a node-like carbon nanotube/nano-cellulose/lignin complex (Example 1) and the node-like carbon nanotube before the formation of the composite body measured by the x-ray photoelectron spectroscopy. The graph in the left side of Figure 1 shows the C1s spectrum peak separation results of Example 1, and the graph in the right side is the result of the C1s spectrum peak separation of the node-like carbon nanotube before the formation of the composite body.
[Figure 2] Figure 2 shows the measurement results obtained by Raman spectroscopy method for a node-like carbon nanotube/nano-cellulose/lignin complex (Example 1) and the node-like carbon nanotube before the formation of the composite body respectively.

### System for carrying out the invention

Embodiments of the present invention are described below. However, the following embodiments are intended to aid the understanding of the inventive subject matter and are not intended to limit the present invention.

### <New nanocarbon composite 1>

The "new nanocarbon composite 1" in the present invention contains "nanocarbon" and "nano-cellulose modified with a functional group(s)".

"Nanocarbon" in the present invention means carbon from nano-size to micro-size, and it refers to carbon having the average diameter of about 1nm to 1*µ*m and the average length of about 1nm to 100*µ*m (preferably, about 1nm to 1*µ*m). Moreover, the types of carbon include carbon nanotubes (CNT), fullerenes, graphene, graphene oxide, carbon black, activated carbon, or mixtures thereof. Preferable type is carbon nanotubes, and even more preferable type is node-like carbon nanotubes (a carbon nanotube in which a node-like or bell-shaped structures are continuously connected).

As for the functional group in the "nano-cellulose modified with a functional group in the present invention, a polar functional group having an affinity to the resin is preferable, and a hydrophilic functional group is preferable. For example, a hydroxyl group, an alcohol group, an amino group (including primary, secondary, tertiary and quaternary amino groups.), a carboxyl group, a carbonyl group, and a hydroxyl group can be mentioned, where a carboxyl group, a carbonyl group or a hydroxyl group is preferable. The nano-cellulose may be modified with two or more types of these functional groups.

The "nano-cellulose modified with a functional group" in the present invention means a commercially available cellulose modified with a functional group (for example, alpha cellulose modified with a functional group), which is then converted into the powder state of average diameter of about 1nm to 800nm and average length of about 100nm to 1000*µ*m by us i ng a power treatment equipment such as an attritor, a ball mill, a sand mill, a bead mill, and a blade mill.

The "new nanocarbon composite 1" in the present invention can be formed by mechanically mixing the nanocarbon in powder state and the nano-cellulose modified with a functional group in powder state by using a power treatment equipment such as an attritor, a ball mill, a sand mill, a bead mill, and a blade mill. While the details of the act i on mechanism are not clear, the following can be considered. In other words, nano-cellulose and nanocarbon formed the composite structure because a functional group having nanocarbon or *π* electron joined with a functional group having nano-cellulose (as an example of composite structure of nanocarbon and nano-cellulose in this invention, a structure where nanocarbon is covered with nano-cellulose can be mentioned; however, without limiting to this, if the structure is such that nano-cellulose is coupled with nanocarbon, the effect and the benefit of this invention would occur.). Especially, when nanocarbon is a node-like carbon nanotube, the carbon nanotubes would have abundant functional groups in the edge portion of each node, and they would be able to bind with more nano-cellulose and form the composite.

### <New nanocarbon composite 2>

The "new nanocarbon composite 2" in the present invention includes" nanocarbon ", a "nano-cellulose modified with a functional group" and an "affinitive binding agent".

As long as the affinitive binding agent in the present invention strengthens the bonding between "nanocarbon" and "nano-cellulose modified with a functional group", it is fine, and examples are lignin, amylose, and amylopectin.

The "new nanocarbon composite 2" in the present invention is can be formed by mechanically mixing the nanocarbon in powder state with the nano-cellulose modified with a functional group(s) in a powder state and an affinitive binding agent in powder state with a pulverizing treatment apparatus such as an attritor, a ball mill, a sand mill, a bead meal, and a blade mill. While the details of the action mechanism are not clear, it is most likely similar to "new nanocarbon composite 1". Furthermore, since the affinitive binding agent strengthens the bonding between "nanocarbon" and "nano-cellulose modified with a functional group(s)" (especially, when the affinitive binding agent is lignin, the affinity between the nanocarbon and the lignin is high), the amount of nano-cellulose (proportion of nano-cellulose with respect to nanocarbon) that forms the composite with nanocarbon would also increase.

Furthermore, when "nanocarbon" in the "new nanocarbon composite 1" or "new nanocarbon complex 2" in the present invention is a node-like carbon nanotube, a physical impact is made on the node-like carbon nanotubes with a pulverizing treatment apparatus during the process of composite formation, thereby increasing the clearance (gap) between nodes of the node-like carbon nanotubes. For this reason, when each clearance (gap) between the nodes is increased by, for example, 1 nm with the pulverizing treatment equipment, if the number of nodes of carbon nanotube is 10, 000, the total amount of clearance would become 10 *µ*m. As evident from this, when the resin having nanocarbon composite containing the node-like carbon nanotubes is impregnated, the mechanical strength (especially bending strength) of the carbon fiber reinforced plastic or the carbon fiber reinforced carbon composite material will significantly increase. <Nanocarbon mixed with the functional groups and having less structural defects>

By using the present invention, as compared to the conventional wet method that uses a strong acid or the like, a functional group can be mixed with nanocarbon via nano-cellulose without causing any damage to the structure of nanocarbon, and the structure of nanocarbon is also not damaged and nanocarbon with fewer structural defects can be obtained.

IG/ID valve can be used as an Index of structural defect of nanocarbon in the present invention. IG refers to the Raman intensity of G-band (it shows a peak in the vicinity of 1590 cm-1 arising from the in-plane vibration of a six-membered ring common to a carbon-based substance.) when the nanocarbon dispersion liquid is measured with the Raman spectroscope. ID refers to the Raman intensity of D-band (it shows a peak in the vicinity of 1350 cm-1 arising from the defect of carbon-based substance). In other words, larger is the ID valve, smaller is the structural defect.

The "new nanocarbon composite 1" or the "new nanocarbon composite 2" in the present invention can be used by mixing in the resin material serving as a base material in the carbon fiber reinforced plastic. Moreover, the carbon fiber reinforced carbon composite material can also be formed by processing carbon fiber reinforced plastic.

As the "resin" containing the "new nanocarbon composite 1" or the "new nanocarbon composite 2" in the present invention, any resin having affinity with the "new nanocarbon composite 1" or the "new nanocarbon composite 2" can be used. An unsaturated polyester resin, an epoxy resin, a vinyl ester resin, a bismaleimide resin, a phenol resin, a cyanate resin, a thermoplastic resin such as a polyimide resin; and a nylon resin, a polypropylene resin, a polyphenylene sulfide resin, a polyetherimide resin, a polycarbonate resin, a polyether terephthalate resin and a polyether ketone resin can be used.

### Embodiments

Hereinafter, embodiments of the present invention will be described. However, the following examples are intended to aid the understanding of the invention subject matter and are not intended to limit the present invention.

### (Embodiment 1)

1) Preparation of carbon nanotube/nano-cellulose/lignin composite 100g of node-like carbon nanotubes (made by Ube Industries, Ltd.) in powder state, 10g of nano-cellulose (*α* cellulose, made by Sigma Co., Ltd.), and 3g of lignin in powder state (made by Wako Pure Chemical Industries, Ltd.) were mechanically and adequately mixed with a pulverizing treatment apparatus such as an attriter, a ball mill, a sand mill, a beads mill, and a blade mill.
2) Measurement of composite state with a functional group Composite state of carbon nanotubes/nano-cellulose/lignin composite in 1) with a functional group was measured with X-ray photoelectron spectroscopy. The total value (total sum of the carboxyl group and the carbonyl group) of the affinitive functional groups combined with the carbon nanotubes relatively increased by about 12% when compared to the node-like carbon nanotubes prior to the formation of the composite body (Figure 1).
3)Measurement of structural defects in carbon nanotubes
   IG/ID value of carbon nanotubes in carbon nanotubes / nano-cellolose / lignin composite in 1) was measured. As compared to the node-I ike carbon nanotubes prior to the formation of composite body, in Embodiment 1, IG/ID value has hardly shown any decline and there is no structural damage (Figure 2). Therefore, a lot more functional groups could be successfully combined with carbon nanotubes, and structural defects occurring in the carbon nanotubes could be successfully decreased.

### Industrial applicability

There are several sports goods made of carbon fiber reinforced plastic, such as golf club shaft, tennis racket, baseball bat, and the like. By using the novel nanocarbon complex described in the present invention, stable and uniform increase in mechanical strength can be obtained in the carbon fiber reinforced plastic or the carbon fiber reinforced carbon composite material impregnated with a resin containing nanocarbon. Therefore, for example, high strength, light weight, and high elasticity golf club shaft, tennis racket, baseball bat and the like can be made. Applications other than sports goods are possible. For example, application to an injection molded product by a thermoplastic resin containing nanocarbon, or application to a string having a coating layer of a thermoplastic resin containing nanocarbon, and commercial applications in a variety of sports goods.

## Claims

1. Nanocarbon composites containing nanocarbon and nano-cellulose modified with functional group(s) for mixing carbon fiber reinforced plastic or carbon fiber reinforced carbon composite material in the resin serving as a base material.

2. Nanocarbon composites containing affinitive binding agent, nanocarbon, and nano-cellulose modified with a functional group(s) for mixing carbon fiber reinforced plastic or carbon fiber reinforced carbon composite material in the resin serving as a base material.
